# EUROPÄISCHE PATENTSCHRIFT

(11) **EP 2 679 854 B1**
(45) Veröffentlichungstag und Bekanntmachung des Hinweises auf die Patenterteilung: **30.11.2016**
(21) Anmeldenummer: 13174012.8
(22) Anmeldetag: 27.06.2013
(51) Int. Cl.: F16D 65/18, F16D 65/56, F16D 55/226

(54) **PNEUMATISCH ODER ELEKTROMECHANISCH BETÄTIGBARE SCHEIBENBREMSE**
PNEUMATICALLY OR ELECTROMAGNETICALLY ACTUATED DISC BRAKE
FREIN À DISQUES POUVANT ÊTRE ACTIONNÉ DE MANIÈRE PNEUMATIQUE OU ÉLECTROPNEUMATIQUE

(30) Priorität: 28.06.2012 DE 102012012816
(43) Veröffentlichungstag der Anmeldung: 01.01.2014
(73) Patentinhaber: KNORR-BREMSE Systeme für Nutzfahrzeuge GmbH, 80809 München (DE)
(72) Erfinder: Camilo-Martinez, Jose, 82008 Unterhaching (DE)

(56) Entgegenhaltungen:
- WO-A1-96/34216
- DE-A1-102009 018 223
- US-A1- 2003 173 164
- US-B1- 6 354 407

## Beschreibung

Die Erfindung betrifft eine pneumatisch oder elektromechanisch betätigbare Scheibenbremse nach dem Oberbegriff des Anspruchs 1.

Eine derartige Scheibenbremse, die als Schiebesattel-Scheibenbremse ausgebildet ist, weist einen zentral angeordneten Bremsstempel auf, an dem ein Bremshebel anliegt, bei dessen Betätigung der Bremsstempel gegen einen Bremsbelag und dieser gegen eine Bremsscheibe gepresst wird.

Zum Ausgleich einer verschleißbedingten Zunahme eines sogenannten Lüft-spiels, d.h., um den Spalt zwischen dem Bremsbelag und der Bremsscheibe in unbetätigtem Zustand, unabhängig vom Verschleiß und Verschleißverhalten der Bremsbeläge konstant zu halten, ist im Bremssattel ein Nachsteller positioniert, der bei Betätigung des Bremshebels verdreht wird und dabei eine axiale Verstellung des Bremsstempels bewirkt unter Mitnahme des Bremsbelages.

Bei einem Bremsvorgang führt der Bremshebel eine Schwenkbewegung aus, die als Drehbewegung auf den Nachsteller übertragen wird. Hierzu sind am Bremshebel zwei Schaltstifte vorgesehen, die in eine Schaltgabel des Nachstellers eingreifen.

Eine über den gesamten Schwenkbereich des Bremshebels konstante Übersetzung ist jedoch damit nicht möglich, so dass entsprechend eine genaue Verstellung des Bremsstempels zum Ausgleich des Lüftspiels nicht gewährleistet ist.

Hierzu trägt überdies bei, dass ein auftretendes Antriebsspiel zwischen dem Nachsteller und dem Bremsstempel einen exakten Lüftspielausgleich nicht zulässt, zumal eine Einstellung der Nachstelleinrichtung insgesamt aufgrund von Toleranzen nur sehr ungenau möglich ist.

Damit ergibt sich die Gefahr eines wechselnden Lüftspiels während des Betriebs, was naturgemäß das Funktionsverhalten der Scheibenbremse beeinträchtigt.

In der DE 10 2009 018223 A1 ist eine Scheibenbremse offenbart, die allerdings, entgegen einer gattungsgemäßen, zwei parallel und abständig zueinander angeordnete Bremsstempel aufweist, die über einen zentralen Nachsteller verstellbar sind. Dabei kämmt der Nachsteller mit einem Kronrad ein auf der den Bremsstempeln abgewandten Seite des Bremshebels angeformtes Stirnradsegment.

Der Erfindung liegt die Aufgabe zugrunde, eine Scheibenbremse der gattungsgemäßen Art so weiterzuentwickeln, dass ein gleichbleibender Ausgleich einer Lüftspieländerung möglich ist und damit die Funktionssicherheit der Scheibenbremse verbessert wird.

Diese Aufgabe wird durch eine Scheibenbremse mit den Merkmalen des Anspruchs 1 gelöst.

Gegenüber dem Stand der Technik, bei dem der Nachsteller im Bremsstempel integriert ist, besteht durch die Erfindung die Möglichkeit, den Nachsteller neben dem Bremsstempel, parallel dazu angeordnet, zu positionieren, wobei er einerseits am Bremssattel befestigt und andererseits an einem Verschlussdeckel gehalten ist, mit dem eine der Bremsscheibe zugewandte Montageöffnung des Bremssattels verschlossen ist.

Dies schafft die Möglichkeit, den Nachsteller durch eine feinere Verzahnung mit dem Bremshebel annähernd spielfrei zu bewegen. Daneben wird eine konstante Übersetzung über den gesamten Schwenkbereich des Bremshebels bewirkt, wodurch das Nachstellverhalten der Bremse in erheblichem Maße verbessert wird.

Gemäß der Erfindung besteht die Verzahnung zwischen dem Bremshebel und dem Nachsteller entweder aus einem am Bremshebel angeordneten, in Schwenkrichtung verlaufenden Stirnradsegment in Korrespondenz mit einem Kronrad des Nachstellers oder aus einem Kegelradantrieb, wobei das bremshebelseitige Kegelrad seitlich über den Bremshebel vorsteht und die Schwenkachse des Bremshebels identisch ist mit der Drehachse des Kegelrades.

Nach einem weiteren Gedanken der Erfindung ist das Kron- oder Kegelrad des Nachstellers auf einer zentralen Antriebsspindel befestigt, die des Weiteren ein Zahnrad mit einer Stirnverzahnung trägt, das mit einem angepassten Zahnrad des Bremsstempels in Eingriff steht.

Während bisher der Bremshebel als Schmiedeteil ausgebildet ist, besteht nun die Möglichkeit, den Bremshebel durch Gießen herzustellen, wobei das Stirnradsegment, gegebenenfalls auch das Kegelrad mit angegossen werden.

Daraus ergibt sich eine durchaus bemerkenswerte Kostenersparnis, die vor allem deshalb bedeutsam ist, als Scheibenbremsen in großen Stückzahlen hergestellt werden und zum Einsatz kommen.

Überdies schafft die Ausbildung des Bremshebels als Gussteil mit integriertem Stirnradsegment die Möglichkeit einer Dimensionierung bei gleicher Belastungsfähigkeit, die nicht größer ist als die der bislang angeschmiedeten Schaltfinger, so dass die Optimierung der Scheibenbremse hinsichtlich der Funktionsfähigkeit der Nachstelleinrichtung bei Beibehaltung der bisherigen Bauraumgröße möglich ist, gegebenenfalls sogar reduziert werden kann.

Das bremsstempelseitige Zahnrad ist verdrehfest an einer Kernspindel des Bremsstempels befestigt, an der der Bremshebel anliegt und die mit einem Außengewinde versehen ist, auf die eine Hülse mit angeschlossenem Druckstück aufgeschraubt ist.

Zur axialen Verstellung des Bremsstempels, um einen Lüftspielausgleich zu erreichen, fungiert die Hülse im Sinne einer Spindelmutter, die gegenüber der Kernspindel fest steht. Hierzu ist das mit der Hülse fest verbundene Druckstück verdrehsicher an einer Belagträgerplatte des Bremsbelages gehalten.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: ein Ausführungsbeispiel einer erfindungsgemäßen Scheibenbremse in einer teilweise geschnittenen, schematisch dargestellten Draufsicht
- Figur 2: einen Teilausschnitt der Scheibenbremse nach Anspruch 1 in einer perspektivischen Ansicht
- Figur 3: eine Einzelheit der Scheibenbremse nach den Figuren 1 und 2 in einer schaubildlichen Darstellung
- Figur 4: ein weiteres Ausführungsbeispiel der Erfindung als Teilausschnitt in einer schematischen Draufsicht
- Figur 5: eine Einzelheit der Ausführung nach Figur 4 in perspektivischer Ansicht.

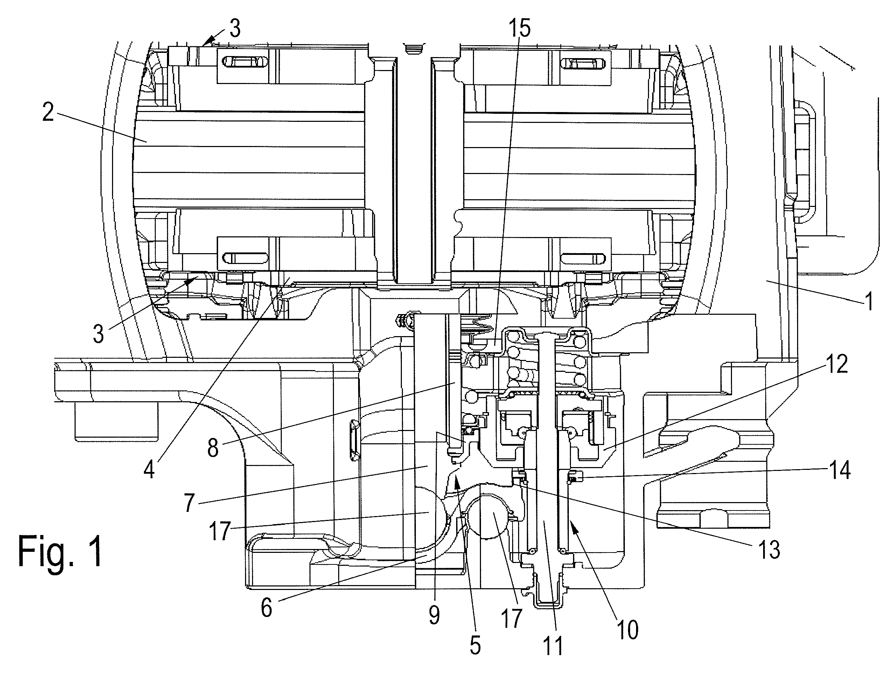

In der Figur 1 ist eine pneumatisch oder elektromechanisch betätigbare Scheibenbremse für ein Nutzfahrzeug dargestellt, mit einem eine Bremsscheibe 2 übergreifenden Bremssattel 1, einem Bremshebel 6 einer Zuspanneinrichtung, mit der Bremsbeläge 3 gegen die Bremsscheibe 2 pressbar sind, wobei ein zentral angeordneter Bremsstempel 5 mittels des Bremshebels 6 unter axialer Verstellung gegen den zugeordneten Bremsbelag 3 drückbar ist.

Hierzu liegt der Bremshebel 6 an Stützlagern 17 an, von denen zwei am Rücken des Bremssattels 1 positioniert sind, während ein weiteres zwischen der Stirnseite einer Kernspindel 7 des Bremsstempels 5 und dem Bremshebel 6 angeordnet ist.

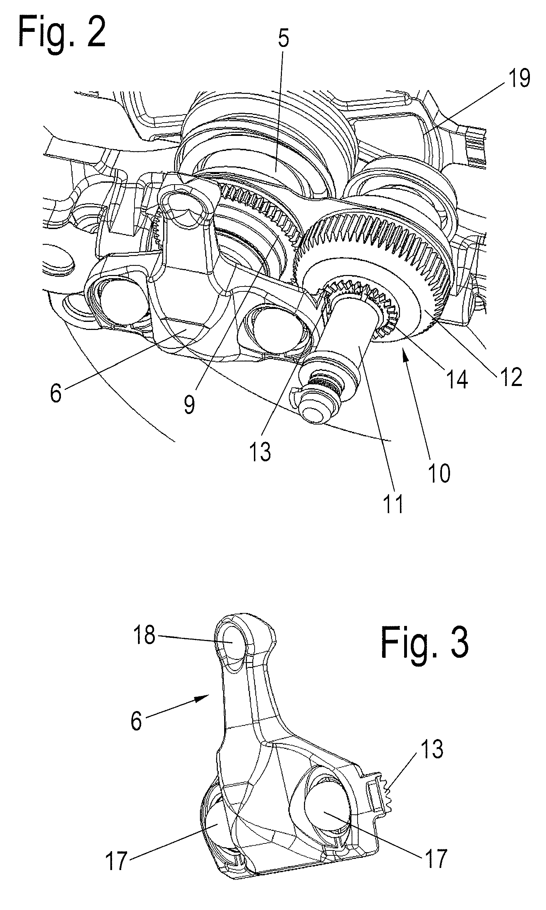

Die Betätigung des Bremshebels 6 erfolgt über einen pneumatisch oder elektromechanisch angetriebenen, nicht dargestellten Stößel, der in eine im Bremshebel 6 vorgesehene Kalotte 18 eingreift (Figur 3).

Im Bremssattel 1 ist ein durch den Bremshebel 6 betätigbarer Nachsteller 10 neben dem Bremsstempel 5 angeordnet, mit dem über eine axiale Verstellung des Bremsstempels 5 eine verschleißbedingte Änderung des Lüftspiels zwischen dem Bremsbelag 3 und der Bremsscheibe 2 im Wesentlichen ausgleichbar ist.

Der Nachsteller weist eine parallel zum Bremsstempel 5 verlaufende Antriebsspindel 11 auf, an der ein Stirnrad 12 verdrehsicher gehalten ist, das mit einem Zahnrad 9 in Eingriff steht, das am Bremsstempel 5 befestigt ist.

Zur Verdrehung des Nachstellers 10 ist bei dem in den Figuren 1-3 dargestellten Ausführungsbeispiel ein mit dem Stirnrad 12 fest verbundenes Kronrad 14 vorgesehen, das mit einem Stirnradsegment 13 des Bremshebels 6 kämmt.

Dieses Stirnradsegment 13, das in der Figur 3 besonders deutlich zu erkennen ist, erstreckt sich in Schwenkrichtung des Bremshebels 6 und bewirkt bei jeder Betätigung eine Drehung des Kronrades 13 und damit des Stirnrades 12.

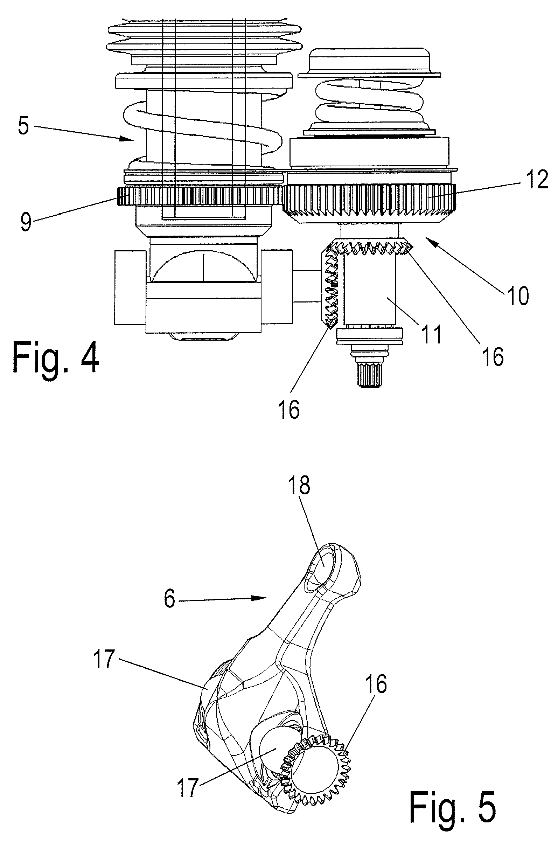

Bei dem in der Figur 4 dargestellten Ausführungsbeispiel erfolgt die Verdrehung des Nachstellers 10 mittels eines Kegelradgetriebes, wobei ein Kegelrad 16 am Bremshebel 6 und das damit korrespondierende andere Kegelrad 16 an der Antriebsspindel 15 befestigt sind.

In der Figur 5 ist als Einzelheit der Bremshebel 6 dargestellt, mit dem angeschlossenen Kegelrad 16, das starr mit dem Bremshebel 6 verbunden ist.

Der Nachsteller 10 ist mit einem Ende im Bremssattel 1 gehalten und mit seinem anderen Ende an einer die Montageöffnung des Bremssattels 1 verschließenden Verschlussplatte 15 befestigt.

Die Kernspindel 7 ist mit einem Außengewinde versehen, auf das eine Hülse 8 aufgeschraubt ist, die verdrehfest mit einem Druckstück 19 (Figur 2) verbunden ist, das wiederum formschlüssig in eine Belagträgerplatte 4 des zugeordneten Bremsbelages 3 eingreift.

### Bezugszeichenliste

- 1: Bremssattel
- 2: Bremsscheibe
- 3: Bremsbelag
- 4: Belagträgerplatte
- 5: Bremsstempel
- 6: Bremshebel
- 7: Kernspindel
- 8: Hülse
- 9: Zahnrad
- 10: Nachsteller
- 11: Antriebsspindel
- 12: Stirnrad
- 13: Stirnradsegment
- 14: Kronrad
- 15: Verschlussplatte
- 16: Kegelrad
- 17: Stützlager
- 18: Kalotte
- 19: Druckstück

## Patentansprüche

1. Pneumatisch oder elektromechanisch betätigbare Scheibenbremse, mit
a) einem eine Bremsscheibe (2) übergreifenden Bremssattel (1),
b) einer im Bremssattel (1) angeordneten, einen Bremshebel (6) aufweisenden Zuspanneinrichtung,
c) einem zentral im Bremssattel (1) angeordneten Bremsstempel (5), der mittels des Bremshebels (6) axial bewegbar gegen einen Bremsbelag (3) pressbar ist,
d) einem im Bremssattel (1) positionierten, durch den Bremshebel (6) betätigbaren Nachsteller (10), mit dem durch eine axiale Verstellung des Bremsstempels (5) eine verschleißbedingte Änderung eines Lüftspiels zwischen dem Bremsbelag (3) und der Bremsscheibe (2) im Wesentlichen ausgleichbar ist,
**dadurch gekennzeichnet, dass**
der Nachsteller (10) ein Stirnrad (12) aufweist, das in ein Zahnrad (9) des Bremsstempels (5) eingreift und ein am als Schmiede- oder Gussteil ausgebildeten Bremshebel (7) auf der dem Bremsstempel (5) zugewandten Seite angeordnetes Stirnradsegment (13) oder ein seitlich über den Bremshebel (7) vorstehendes Kegelrad (16) mit einem gegenüber dem Stirnrad (12) des Nachstellers (10) verdrehfest gehaltenen Kronrad (14) oder Kegelrad (16) kämmt, wobei die Drehachse des Stirnradsegmentes (13) oder des bremshebelseitigen Kegelrades (16) identisch ist mit der Schwenkachse des Bremshebels (6).

2. Scheibenbremse nach Anspruch 1, **dadurch gekennzeichnet, dass** das Stirnradsegment (13) und/oder das Kegelrad (16) einstückig mit dem Bremshebel (6) verbunden ist.

3. Scheibenbremse nach Anspruch 1 oder 2, **dadurch gekennzeichnet, dass** der Nachsteller (10) neben dem Bremsstempel (5) positioniert ist.

4. Scheibenbremse nach einem der vorhergehenden Ansprüche, **dadurch gekennzeichnet, dass** der Nachsteller (10) einerseits im Bremssattel (1) und andererseits in einer eine Montageöffnung des Bremssattels (1) verschließenden Verschlussplatte (15) gehalten ist.

5. Scheibenbremse nach einem der vorhergehenden Ansprüche, **dadurch gekennzeichnet, dass** der Bremshebel (6) als Guss- oder Schmiedeteil ausgebildet ist.

6. Scheibenbremse nach einem der vorhergehenden Ansprüche, **dadurch gekennzeichnet, dass** der Bremsstempel (5) eine Kernspindel (7) aufweist, an der der Bremshebel (6) anliegt und die mit einem Außengewinde versehen ist, auf das die Hülse (8) aufgeschraubt ist.

7. Scheibenbremse nach Anspruch 6, **dadurch gekennzeichnet, dass** die Hülse (8) verdrehsicher mit einem Druckstück (19) verbunden ist.

8. Scheibenbremse nach Anspruch 7, **dadurch gekennzeichnet, dass** das Druckstück (19) formschlüssig in einer Belagträgerplatte (4) des zugeordneten Bremsbelages (3) gehalten ist.

## Claims

1. Pneumatically or electromechanically actuated disc brake, comprising
a) a brake calliper (1) encompassing a brake disc (2),
b) an application device located in the brake calliper (1) and comprising a brake lever (6),
c) a brake plunger (5), which is centrally located in the brake calliper (1) and can be pushed against a brake pad (3) in an axially movable manner by means of the brake lever (6),
d) an adjuster (10), which is positioned in the brake calliper (1) and actuable by the brake lever (6) and by means of which a wear-related change of a clearance between the brake pad (3) and the brake disc (2) can be substantially compensated by an axial adjustment of the brake plunger (5),
**characterised in that**
the adjuster (10) comprises a spur gear (12), which engages with a gear (9) of the brake plunger (5), and **in that** a spur gear segment (13) located on the brake lever (7), which is designed as a forging or casting, on the side facing the brake plunger (5) or a bevel gear (16) projecting laterally beyond the brake lever (7) meshes with a crown wheel (14) or bevel gear (16) held non-rotatably relative to the spur gear (12) of the adjuster (10), wherein the axis of rotation of the spur gear segment (13) or of the brake lever-side bevel gear (16) is identical to the pivoting axis of the brake lever (6).

2. Disc brake according to claim 1, **characterised in that** the spur gear segment (13) and/or the bevel gear (16) is/are joined to the brake lever (6) to form a single piece.

3. Disc brake according to claim 1 or 2, **characterised in that** the adjuster (10) is positioned adjacent to the brake plunger (5).

4. Disc brake according to any of the preceding claims, **characterised in that** the adjuster (10) is held in the brake calliper (1) on one side and in a closing plate (15) closing a mounting opening of the brake calliper (1) on the other side.

5. Disc brake according to any of the preceding claims, **characterised in that** the brake lever (6) is designed as a casting or forging.

6. Disc brake according to any of the preceding claims, **characterised in that** the brake plunger (5) comprises a core spindle (7), against which the brake lever (6) bears and which is provided with a male thread onto which the sleeve (8) is tightened.

7. Disc brake according to claim 7, **characterised in that** the sleeve (8) is non-rotatably joined to a pressure pad (19).

8. Disc brake according to claim 8, **characterised in that** the pressure pad (19) is held positively in a backing plate (4) of the associated brake pad (3).

## Revendications

1. Frein à disque (1) à commande pneumatique ou électromécanique, comprenant
a) un étrier de frein (1) chevauchant un disque de frein (2),
b) un moyen de serrage de frein, qui est disposé dans ledit étrier de frein (1) et qui comprend un levier de frein (6),
c) un tampon de freinage (5) disposé en position centrale dans ledit étrier de frein (1), qui est axialement mobile moyennant ledit levier de frein (6), en étant pressé contre une garniture de frein (3),
d) un dispositif de rattrapage (10) positionné dans ledit étrier de frein (1) et commandable par ledit levier de frein (6), qui sert à compenser essentiellement une modification d'un jeu entre ladite garniture de frein (3) et ledit disque de frein (2), qui est due à l'usure, par un ajustement axiale dudit tampon de freinage (5),
**caractérisé en ce**
**que** ledit moyen de rattrapage (10) comprend une roue droite (12) en prise dans une roue dentée (9) dudit tampon de freinage (5) et s'engrenant dans un segment de roue droite (13) disposé à la face opposée audit tampon de freinage (5) audit levier de freinage (7), qui est configuré sous forme d'une pièce moulée ou forgée, ou un pignon conique (16) faisant saillie latéralement de ladite roue droite (12), à une couronne à denture (14) ou roue conique (16) retenue de façon de ne pouvoir tourner par rapport à ladite roue droite (12) dudit moyen de rattrapage (10), dans lequel l'axe de rotation dudit segment de roue droite (13) ou de ladite roue conique (16) du côté dudit levier de frein est identique avec l'axe de pivotement dudit levier de frein (6).

2. Frein à disque selon la revendication 1, **caractérisé en ce que** ledit segment de roue droite (13) et/ou ladite roue conique (16) est/sont reliée(s) intégralement avec ledit levier de frein (6).

3. Frein à disque selon la revendication 1 ou 2, **caractérisé en ce que** ledit moyen de rattrapage (10) est positionné à côté dudit tampon de freinage (5).

4. Frein à disque selon une quelconque des revendications précédentes, **caractérisé en ce que** ledit moyen de rattrapage (10) est retenu, d'un côté, dans ledit étrier de frein (1) et, d'autre côté, dans une plaque de fermeture (15), qui ferme une ouverture de montage dudit étrier de frein (1).

5. Frein à disque selon une quelconque des revendications précédentes, **caractérisé en ce que** ledit levier de frein (6) est conçu sous forme d'une pièce en fonte ou forgée.

6. Frein à disque selon une quelconque des revendications précédentes, **caractérisé en ce que** ledit tampon de freinage (5) comprend une broche centrale (7), contre laquelle porte ledit levier de frein (6) et qui est munie d'un filet extérieur, sur lequel est vissé ladite douille (8).

7. Frein à disque selon la revendication 6, **caractérisé en ce que** ladite douille (8) est relié à un élément de pression (19) de manière solidaire en rotation.

8. Frein à disque selon la revendication 7, **caractérisé en ce que** ledit élément de pression (19) est retenue par complémentarité des formes dans une plaque d'appui de la garniture (4) de la garniture de frein (3) y affectée.
